# EUROPEAN PATENT APPLICATION

(11) **EP 2 824 603 A2**
(43) Date of publication of application: **14.01.2015**
(21) Application number: 14174828.5
(22) Date of filing: 27.06.2014
(51) Int. Cl.: G06F 21/33, H04L 29/06

(54) **System and method for authenticating public keys**

(30) Priority: 28.06.2013 ZA 201304834
(71) Applicant: ENTERSEKT (PTY) LTD, 7600 Stellenbosch (ZA)
(72) Inventor: Brand, Christiaan Johannes Petrus, 7600 Stellenbosch (ZA)
(74) Representative: Hopkin, Tobias J.B.

(57) **Abstract**

A method and system (100) for authenticating a public key of a server digital certificate of a third party online entity (130) is disclosed. The method includes establishing a secure, independent connection (140) between an aggregation server (110) and a mobile device (120), over which a request to authenticate a public key of the server digital certificate is received from the mobile device (120). The request includes an identifier of the third party online entity (130) with which the mobile device (120) seeks to communicate. The aggregation server (110) retrieves the server digital certificate (134) of the third party online entity (130) from the entity, obtains the public key (132) or a public key fingerprint from the server digital certificate (134); and transmits at least the obtained public key (132) or public key fingerprint, as the case may be, to the mobile device (120) so as to enable the mobile device (120) to unambiguously communicate or establish a connection (160) with the third party online entity (130).

## Description

### FIELD OF THE INVENTION

This invention relates to a system and method for authenticating public keys and, more particularly, to a system and method for authenticating a public key of a digital certificate of an online entity with which a mobile device seeks to communicate.

### BACKGROUND TO THE INVENTION

In modern-day business, an increasing number of transactions are conducted electronically through online application servers, by means of communication over networks such as, most commonly, the Internet. While traditionally conducted from personal computers and other devices which typically have considerable processing power, transactions are increasingly being conducted from Internet enabled mobile phones and other mobile devices that do not necessarily have the same processing capabilities.

In the remainder of this specification the term "mobile device" should be interpreted to include any mobile communications device capable of communicating over a communications network, such as a cellular network, and having at least a limited amount of processing power. The term should be interpreted to specifically include all mobile or cellular phones but may also include portable computers such as laptops, handheld personal computers, tablet computers and the like.

A problem with conventional online transactions and communications is the inherent security risk associated with online communication. Unscrupulous entities are constantly developing new techniques to intercept user and transactional information and to use these for defrauding the parties involved. Examples of such security threats include identity theft, Man-In-The-Middle (MITM) attacks, Pharming, Phishing, third party infrastructure hijacking, eavesdropping, Trojans, key loggers as well as various others, and combinations of these threats.

One of the most common security measures used in online transactions and communications today is Transport Layer Security (TLS) or its predecessor, Secure Socket Layer (SSL). TLS and SSL are both what is known as cryptographic protocols and are used to encrypt segments of network connections at the application layer to ensure secure end-to-end transit at the transport layer.

TLS and SSL employ a public-key key agreement protocol, wherein a remote online host presents a public key as part of a digital certificate to a mobile device when the mobile device, typically through its web browser or another software application installed thereon, attempts to establish a secure communication channel with the host. The digital certificate is "signed" with a digital signature which binds the public key to an identity, such as the domain name owner or controller of the host website.

However, it may be possible for a malicious or "eavesdropping" entity to intercept these communications using a so-called "intermediate" digital certificate. For example, the eavesdropping entity can present a valid digital certificate which appears to originate from the owner or controller of the domain name to the web browser of the mobile device, and present its own public key instead of the actual host's public key, thereby impersonating a website the mobile device is attempting to securely access.

This can allow the eavesdropping entity to carry out a MITM attack. The eavesdropping entity can, for example, intercept, decrypt and read communications, then re-encrypt it and pass it on to the intended recipient. The intercepted communications may, in some cases, be used to carry out fraudulent activities. In this way, users are deceived into trusting websites appearing to originate from domain owners of websites, but actually originating from malicious or eavesdropping sources.

### SUMMARY OF THE INVENTION

In accordance with this invention there is provided a method of authenticating a public key of a server digital certificate of a third party online entity, the method being carried out at an aggregation server and comprising the steps of:
establishing a secure, independent connection with a mobile device;
receiving, from the mobile device, a request to authenticate a public key of the server digital certificate, the request including at least an identifier of the third party online entity with which the mobile device seeks to communicate;
retrieving the server digital certificate of the third party online entity from the third party entity;
obtaining the public key or a public key fingerprint from the server digital certificate; and
transmitting, to the mobile device over the secure connection, at least the obtained public key or public key fingerprint, as the case may be, so as to enable the mobile device to unambiguously communicate or establish a connection with the third party online entity.

A further feature provides for the step of retrieving the digital certificate from the third party online entity to include the steps of checking whether the server digital certificate, the public key of the server digital certificate or fingerprint of the public key is already stored in a database of the aggregation server and, if it is so stored in a database of the aggregation server, retrieving the server digital certificate, public key or public key fingerprint, as the case may be, from the database of the aggregation server, and, if it is not so stored in a database of the aggregation server, retrieving the server digital certificate, public key or public key fingerprint directly from the third party online entity over a communications network.

Yet further features provide for the method to include one or more of the steps of: receiving, from the mobile device, a public key, public key fingerprint or digital certificate to be authenticated, the public key, public key fingerprint or digital certificate purportedly being that of the third party online entity, comparing the public key, public key fingerprint or digital certificate received from the mobile device to that of the server digital certificate retrieved from the third party online entity, if the public key, public key fingerprint or digital certificate received from the mobile device matches that of the server digital certificate retrieved from the third party, transmitting a public key authentication message to the mobile device, and if the public key, public key fingerprint or digital certificate received from the mobile device does not match that of the server digital certificate retrieved from the third party, transmitting either or both of a public key rejection message and the server digital certificate retrieved from the third party online entity to the mobile device over the secure connection.

A still further feature provides for the step of establishing the secure, independent connection with the mobile device to include establishing an out-of-band connection with the mobile device, preferably over a separate communication channel than the one used for communicating between the mobile phone and the third party online entity.

The invention also provides a method conducted at a mobile device, the method comprising the steps of:
establishing a secure, independent connection with an aggregation server;
transmitting, to the aggregation server over the secure connection, a request to authenticate a public key of a server digital certificate of a third party online entity, the request including at least an identifier of the third party online entity with which the mobile device seeks to communicate;
receiving, from the aggregation server over the secure connection, at least the public key or a public key fingerprint of the server digital certificate; and
using the public key or public key fingerprint received to unambiguously communicate or establish a connection with the third party online entity.

Further features provide for the step of using the public key or public key fingerprint received to unambiguously establish a connection with the third party online entity to include the steps of: comparing the public key or public key fingerprint received from the aggregation server to a public key, public key fingerprint or digital certificate purportedly being that of the third party online entity, and, if the public key or public key fingerprint so received matches the public key, public key fingerprint or digital certificate purportedly being that of the third party online entity, to establish the connection.

A still further feature provides for the step of establishing the secure, independent connection with the aggregation server to include establishing an out-of-band connection with the aggregation server, preferably over a separate communication channel than the one used for communicating between the mobile phone and the third party online entity.

The invention still further provides a system for authenticating a public key of a third party online entity, the system comprising:
an aggregation server;
a third party online entity having a server digital certificate associated therewith; and
a mobile device which seeks to communicate with the third party online entity;
wherein the aggregation server is configured to:
   establish a secure, independent connection with the mobile device;
   receive, from the mobile device, a request to authenticate a public key of the server digital certificate over the secure connection, the request including at least an identifier of the third party online entity;
   retrieve the server digital certificate from the third party online entity;
   obtain the public key or a public key fingerprint from the server digital certificate; and
   transmit, to the mobile device over the secure connection, at least the obtained public key or public key fingerprint, so as to enable the mobile device to unambiguously establish a connection with the third party online entity.

Further features provide for the secure connection to be an out-of-band connection, preferably established over a separate communication channel than the one used for communicating between the mobile phone and the third party online entity, for the secure connection to be established using a mobile device digital certificate previously provided to the mobile device by the aggregation server; for the mobile device to be a mobile phone; and for the third party online entity to be an application server.

Yet further features provide for one or both of the server digital certificate and the mobile device digital certificate to be X.509 certificates; and for the identifier of the third party online entity to include one or more of a third party domain name, a third party server address, an identifier of a domain owner for the third party online entity, an identifier of a domain controller for the third party online entity, and an identifier of a certificate authority associated with the server digital certificate.

Still further features provide for the mobile device to be operable to transmit communications to and receive communications from the aggregation server using a software application installed thereon; for the mobile device to seek communication with the third party online entity using a software application installed thereon; and for the software application to be a web browser.

The invention also provides a computer program product for authenticating a public key of a server digital certificate of a third party online entity, the computer program product comprising a computer-readable storage medium having computer-readable program code configured to:
establish a secure, independent connection with a mobile device;
receive, from the mobile device, a request to authenticate the public key of the server digital certificate, the request including at least an identifier of the third party online entity with which the mobile device seeks to communicate;
retrieve the server digital certificate of the third party online entity from the third party entity;
obtain the public key or a public key fingerprint from the server digital certificate; and
transmit, to the mobile device over the secure connection, at least the obtained public key or public key fingerprint, as the case may be, so as to enable the mobile device to unambiguously communicate or establish a connection with the third party online entity.

The invention also provides a computer program product for authenticating a public key of a server digital certificate of a third party online entity, the computer program product comprising a computer-readable storage medium having computer-readable program code configured to:
establish a secure, independent connection with an aggregation server;
transmit, to the aggregation server over the secure connection, a request to authenticate the public key of the server digital certificate of the third party online entity, the request including at least an identifier of the third party online entity;
receive, from the aggregation server over the secure connection, at least the public key or a public key fingerprint of the server digital certificate; and
use the public key or public key fingerprint received to unambiguously communicate or establish a connection with the third party online entity.

### BRIEF DESCRIPTION OF THE DRAWINGS

In the drawings:-
- Figure 1: is a schematic illustration of an embodiment of a system for authenticating a public key;
- Figure 2: is a swim lane flowchart which illustrates a method of authenticating a public key of a server digital certificate of a third party online entity;
- Figure 3: is a swim lane flowchart which illustrates a method of authenticating a public key of a server digital certificate of a third party online entity;
- Figure 4: is a schematic illustration of the embodiment of the system shown in Figure 1, wherein an unwanted entity attempts to intercept and decrypt communications between a mobile device and an application server;
- Figure 5: is a swim lane flowchart which illustrates a process wherein an unwanted entity is prevented from intercepting and decrypting communications between the mobile device and the application server using the system of Figure 4;
- Figure 6: illustrates a block diagram of a computing device that can be used in various embodiments of the present invention; and
- Figure 7: illustrates a block diagram of a mobile device that can be used in various embodiments of the present invention.

### DETAILED DESCRIPTION WITH REFERENCE TO THE DRAWINGS

Embodiments of the present invention are directed toward a system and method for authenticating a public key of a digital certificate of an online entity.

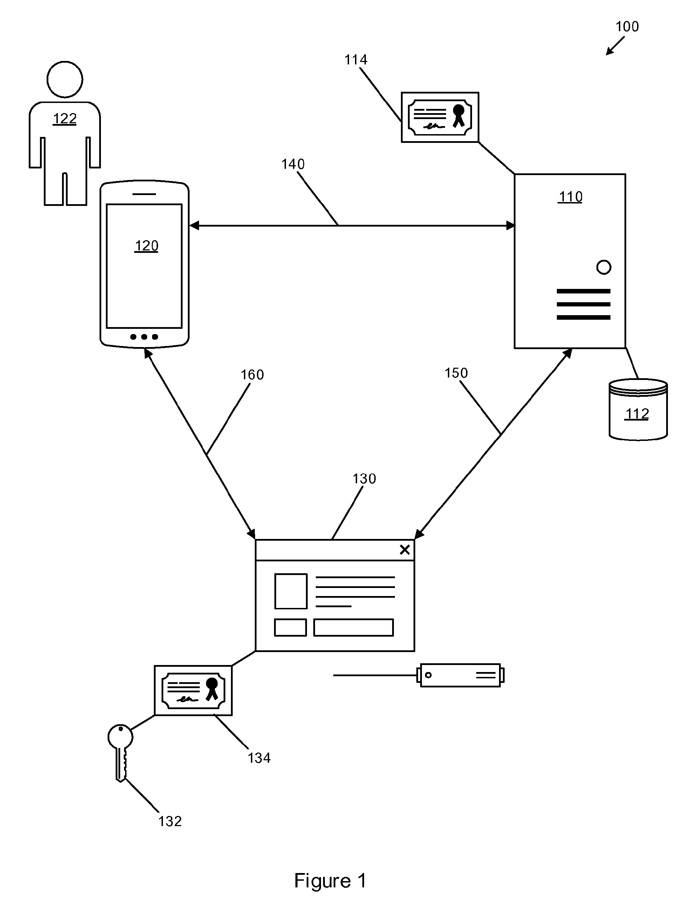

One embodiment of a system (100) for authenticating a public key according to the invention is shown in Figure 1. The system comprises an aggregation server (110), a mobile device, in this case a mobile phone (120) of a user (122), and a third party online entity, which is an application server (130) in this embodiment.

The aggregation server (110) is configured to establish a secure connection (140) with the mobile phone (120) over any suitable network, typically the Internet. It should be appreciated that the secure connection (140) between the mobile phone (120) and the aggregation server (110) is established out-of-band, in other words, independently from any communication channel that may have been, or is in the process of being, established between the mobile phone (120) and the application server (130) of the online third party entity. The aggregation server (110) is further configured to receive a request from the mobile phone (120) to authenticate a public key (132) of a server digital certificate (134) of the application server (130), the mobile phone (120) seeking to communicate with the application server (130). The aggregation server (110) also includes a database (112) in which digital certificates of a plurality of online entities may be stored.

Upon receiving the request for authentication of the server public key, the aggregation server (110) obtains the public key (132), or a fingerprint of the public key, of the server digital certificate (134) by establishing a connection (150) with the application server (130) over any suitable network, typically the Internet, and retrieving the server digital certificate (134) from the application server (130). The aggregation server (110) may then, over the secure connection (140) with the mobile phone (120), transmit the obtained public key (132), the fingerprint of the public key (132) or the server digital certificate (134) itself, as the case may be, to the mobile phone (120), which enables the mobile phone (120) to unambiguously establish a connection (160) with the application server (130).

In a preferred embodiment, the secure connection (140) between the aggregation server (110) and the mobile phone (120) is established by means of a mobile device digital certificate (114) previously provided to the mobile device (120) by the aggregation server (110) or another trusted third party certificate authority. In this embodiment, both digital certificates (114, 134) are X.509 certificates.

The mobile device (120) transmits communications to and receives communications from the aggregation server (110) using a software application installed thereon. The mobile device digital certificate (114) may be provided to the mobile device (120) during or shortly after installation of this software application. The mobile device (120) may, in embodiments of the invention, send and receive communications from the aggregation server (110) using a web browser installed thereon.

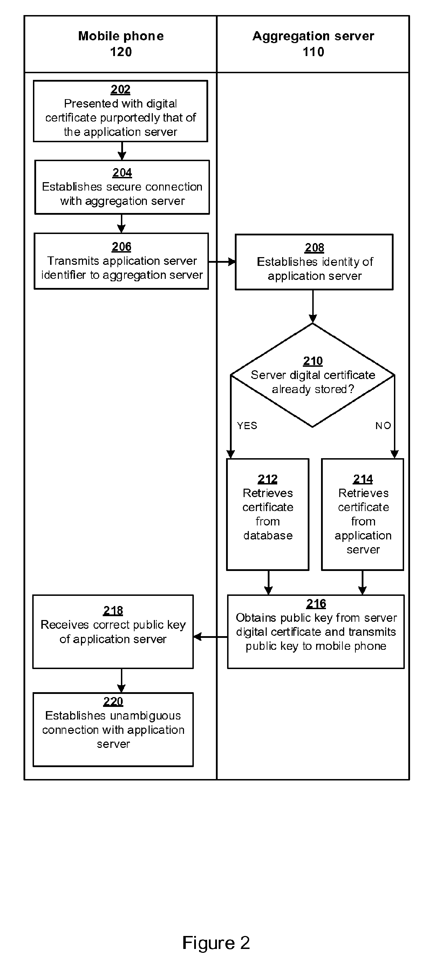

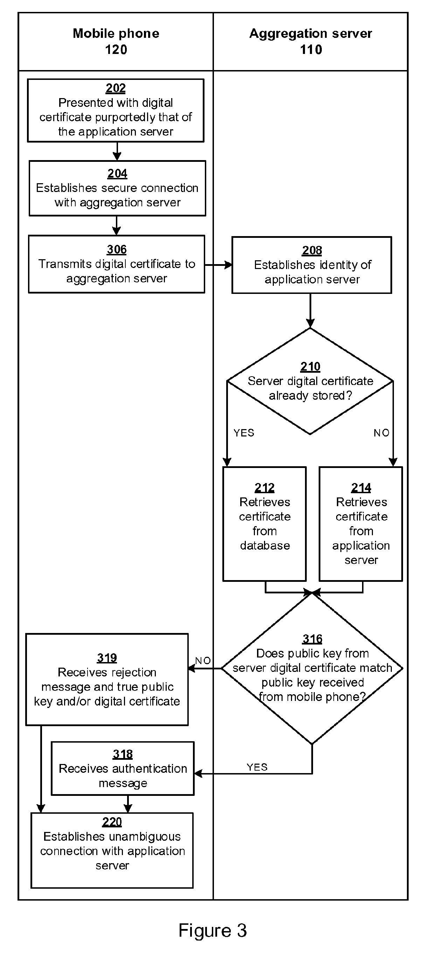

Figure 2 illustrates a first method of authenticating the public key (132) of the server digital certificate (134) of the application server (130) using the system of Figure 1. In a typical scenario, the user (122) seeks to access the application server (130) unambiguously and securely, and as will be described with reference to Figures 2 and 3, makes use of the aggregation server (110) to authenticate a public key of a digital certificate which purportedly belongs to the application server (130), before initiating a communication session between the mobile phone (120) of the user (122) and the application server (130), typically by way of an SSL or TLS protocol.

At a first stage (202), the mobile phone (120) is presented with a digital certificate which purportedly belongs to the application server (130) it seeks to communicate with. The mobile phone then, at a next stage (204), establishes a secure, out-of-band connection with the aggregation server (110), preferably in the manner described above. The mobile phone (120) then, at a next stage (206), transmits a request to the aggregation server (110) to authenticate a public key of the digital certificate it was presented with. This request includes at least an identifier of the application server (130). The identifier may be one or more of an application server domain name, an application server address, an identifier of a domain owner for the application server, an identifier of a domain controller for the application server, an identifier of a certificate authority associated with the server digital certificate, or the like. The mobile phone (120) may, alternatively, transmit the digital certificate it was presented with to the aggregation server (110). The aggregation server (110) may then use the digital certificate to obtain the necessary identifier. In this embodiment, the mobile device (120) transmits a domain name identifying the application server (130) to the aggregation server.

The aggregation server (110) establishes the identity of the application server (130) at a next stage (208) by using at least the identifier transmitted by the mobile phone (120). The aggregation server (110) then, at a next stage (210), checks whether the server digital certificate (132) of the application server (130) is already stored in the database (112). If the server digital certificate (132) is already stored in the database (112) of the aggregation server (110), it is retrieved from the database (112), at a next stage (212). If the server digital certificate (132) is not already stored in the database (112), it is retrieved directly from the application server (130) over the connection (150), at a next stage (214).

It is foreseen that the aggregation server (110) may also, periodically or during the process of authenticating a public key, retrieve the server digital certificate (132) directly from the application server (130) even if it is already stored in the database (112). This can be used as an additional security measure in order to ensure that the correct certificate is obtained, for example, if the application server (130) has obtained a different certificate since the previous certificate was stored in the database (112).

At a next stage (216), the aggregation server (110) obtains the public key (134), or a fingerprint of the public key, from the server digital certificate (132) and transmits the obtained public key (134) or public key fingerprint, as the case may be, to the mobile phone (120) over the secure connection (140). The mobile phone (120) then receives, at a next stage (218), the true public key (134) or public key fingerprint for the application server (130) it wishes to access, and can proceed to, at a final stage (220), unambiguously establish the connection (160) with the application server (130).

In the scenario described with reference to Figure 2, the mobile device is therefore able to distinguish, typically by means of a software application installed thereon, between a public key it is presented with by the application server and a true public key it receives from the aggregation server. If these keys, or their fingerprints, differ, it may be the case that the mobile device was presented with a digital certificate by a malicious or eavesdropping entity or even an authorised anonymous intermediary. In such a case, the mobile device may simply establish a connection with the application server using the true public key, because even if a malicious or eavesdropping entity intercepts such communications, the communications will be encrypted with the application server's true public key and the malicious or eavesdropping entity will not be able to decrypt and read such communications, because it does not possess the true corresponding private key of the application server.

In other embodiments, the aggregation server (110) may be responsible for establishing whether or not a digital certificate presented to the mobile phone (120) is authentic. Figure 3 illustrates a second method of authenticating the public key (132) of the server digital certificate (134) of the application server (130) using the system of Figure 1. Many of the steps shown in Figure 3 are similar to the steps shown in Figure 2, and the same reference numerals that were used in Figure 2 are used in Figure 3 to refer to these steps.

In this scenario, after establishing the secure connection (140) with the aggregation server (110) at an initial stage (204), the mobile phone (120) transmits, at a next stage (306), the digital certificate, public key or public key fingerprint purported to be that of the application server (130) to the aggregation server (110) in order for the aggregation server (110) to authenticate it.

The aggregation server (110) then, after retrieving the server digital certificate (132), public key or public key fingerprint, in a manner similar to the manner described with reference to Figure 2, at a next stage (316), obtains the true public key (132) or public key fingerprint and compares it to that received from the mobile phone (120). If the public key, public key fingerprint and/or digital certificate received from the mobile phone (120) matches that retrieved from the application server (130), at a next stage (318), the aggregation server (110) transmits a public key authentication message to the mobile phone (120). Conversely, if the public key, public key fingerprint and/or digital certificate received from the mobile phone (120) does not match that retrieved from the application server (130), the aggregation server (110), at a next stage (319), transmits a public key rejection message and the server digital certificate (134), or only the public key (132) or public key fingerprint, retrieved from the application server (130) entity to the mobile phone (120).

In both cases, the mobile phone (120), at a next stage (220), is in possession of the true public key (134) of the application server (130) and can proceed to establish an unambiguous connection therewith.

If the mobile device receives an authentication message, it can be sure that the digital certificate it was initially presented with, was in fact that of the application server it seeks to communicate with. If the mobile device receives a rejection message, it is possible that the mobile device was presented with a digital certificate by a malicious or eavesdropping entity. In such a case, the mobile device may simply establish a connection with the application server using the true public key, because even if a malicious or eavesdropping entity intercepts such communications, the communications will be encrypted with the application server's public key and the malicious or eavesdropping entity will not be able to decrypt and read such communications, because it does not possess the private key of the application server.

It is foreseen that, in order to avoid potential malicious or eavesdropping entities intercepting communications, communications between the mobile phone (120) and the application server (130) may be forwarded between secure connections (140, 150) with the aggregation server (110). In such cases, the secure connection (140) between the aggregation server (110) and the mobile phone (120) is established by means of the mobile device digital certificate (114) previously provided to the mobile device (120) by the aggregation server (110) or another trusted third party certificate authority. The secure connection (150) may be established in a similar way, for example, the aggregation server (110) may use the server digital certificate (132) it already possesses to establish the secure connection (150). The mobile phone (120) can then send communications to and receive communications from the application server (130) over these secure communications, which the aggregation server (110) simply passes on between these entities (120, 130).

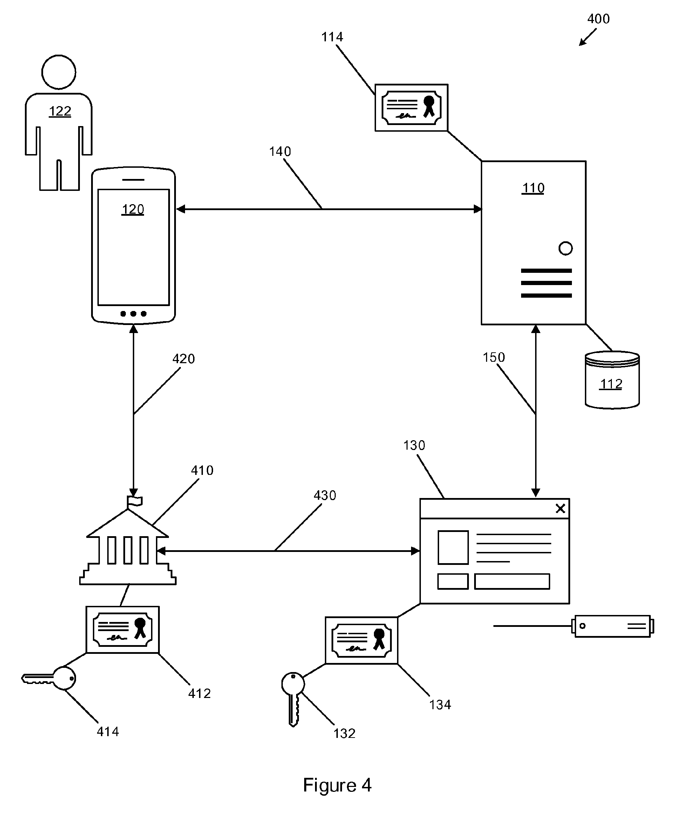

Figure 4 illustrates a system (400) similar to the system of Figure 1. As before, like reference numerals represent like components, entities, connections and relationships to those described above with reference to Figure 1. In this case, an unwanted entity (410) attempts to intercept and decrypt communications between the mobile phone (120) and the application server (130).

When the mobile phone (120) attempts to establish a connection with the application server (130), the unwanted entity (410) intercepts the communication and presents the mobile phone (120) with a pseudo digital certificate (412) purporting to be that of the application server (130). This pseudo digital certificate (412) will typically be signed by a valid certificate authority and therefore seem to be authentic. However, the pseudo digital certificate (412) has a public key (414) different to the public key (132) of the server digital certificate (132). Generally, the mobile phone (120) will not have local access to the true public key (132) and therefore needs to authenticate the received public key (414).

It the mobile phone (120) trusts the unwanted entity (410) and encrypts its outbound communications with the public key (414) of the unwanted entity (410), the unwanted entity (410) will be able to, in some cases, intercept, decrypt and read communications, then re-encrypt it and pass it on to the intended recipient, which is the application server (130).

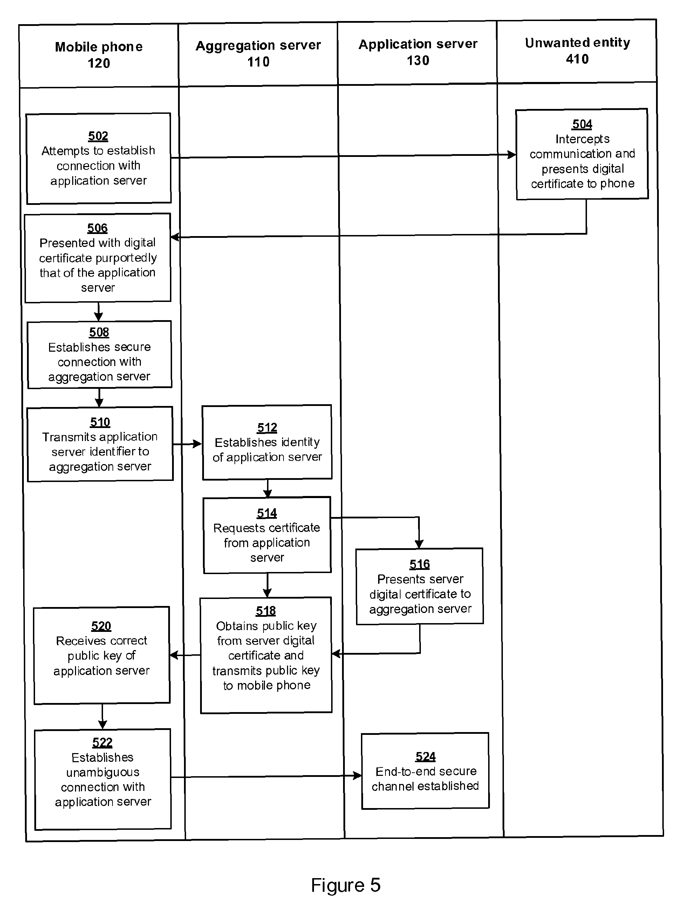

Figure 5 illustrates one method of preventing the unwanted entity (410) from intercepting and decrypting communications between the mobile phone (120) and the application server (130) according to embodiments of the invention.

At a first stage (502), the mobile phone (120) requests access or a communications channel to the application server (130). The unwanted entity (410), at a next stage (504), intercepts the communication and presents the pseudo digital certificate (412) to the mobile phone. The mobile phone (120), at a next stage (506), receives the pseudo digital certificate (412) and at a next stage (508), typically using a software application installed thereon, establishes a secure connection with the aggregation server (110).

The mobile phone (120) then, at a next stage (510), transmits a request to the aggregation server (110) to authenticate the public key (414) of the pseudo digital certificate (412) it was presented with. This request includes at least an identifier of the application server (130) it wishes to communicate with. The aggregation server (110) establishes the identity of the application server (130) at a next stage (512) by using at least the identifier transmitted by the mobile phone (120).

The aggregation server (110), at a next stage (514), requests the server digital certificate (134) from the application server (140). At a next stage (516), the application server (140) presents the server digital certificate (134) to the aggregation server (110), and the aggregation server (110), at a next stage (518), obtains the public key (132) from the server digital certificate (134) and transmits it to the mobile phone (120).

The mobile phone (120) then, at a next stage (520), receives the true public key (132). In this case, the mobile phone (120) does not use the first public key (414) it was presented with to encrypt or decrypt information, but rather uses the public key (132) it received from the aggregation server (110). This ensures that no malicious or eavesdropping entity will be able to decipher communications it intercepts between the mobile phone (120) and the application server (130). In this manner, an unambiguous connection is established (522) to enable end-to-end secure communication (524) between the mobile phone (120) and the application server (130).

A system and method for authenticating a public key of a digital certificate of an application server is therefore provided. The system and methods described can, in particular but not exhaustively, prevent eavesdropping entities from carrying out man-in-the-middle attacks. This ensures that users are not deceived into trusting digital certificates appearing to originate from a certain online server, but actually originating from malicious or eavesdropping sources.

Furthermore, in embodiments of the invention, the true public key or certificate is transmitted to a mobile device "out-of-band". In other words, a separate, secure channel is established to ensure that unwanted entities do not tamper with communications between the aggregation server and a mobile device and between the aggregation server and an application server. Alternatively, an "out-of-band" channel can be created in which traffic between the mobile device and application server are relayed by the aggregation server to prevent unwanted entities from intercepting the communications.

In a specific embodiment of the invention the secure connection (140) between the mobile phone (120) and the aggregation server (110) may be established using a proprietary system and method provided by Entersekt (Pty) Ltd and referred to commercially as e(m)Cert. The system is used for authenticating a communications channel between a mobile handset associated with the user and a server, for uniquely identifying the mobile handset and for encrypting communications between the mobile handset and the server over the communication channel, and includes a certificate authority, a user side software application installed on the mobile handset, and a server side software application installed on the server. The system is characterized in that: the user side software application utilizes a user side encryption module provided by the certificate authority which is configured to automatically request a digital user certificate from the certificate authority; the certificate authority is adapted to create and issue the user certificate to the mobile handset upon receiving the request and to calculate a user private and public key pair on behalf of the mobile handset if the mobile handset does not have enough processing power to do so itself, the user certificate including at least one identifier which is uniquely associated with the mobile handset and the user public key; the server side software application utilizes a server side encryption module provided by the certificate authority and is configured to request and receive the user certificate from the mobile handset, to validate it as originating from the certificate authority using the server side encryption module, to uniquely identify the mobile handset from the identifier in the user certificate, and to transmit a digital server certificate issued to it by the certificate authority to the mobile handset where it is received by the user side software application and validated as originating from the certificate authority using the user side encryption module; and, upon successful validation of the user certificate by the server side software application and of the server certificate by the user side software application, the user side software application and the server side software application are further configured to share encryption keys utilizing their respective certificates to provide encryption, the encryption keys being useful for further data encryption between the mobile handset and the server.

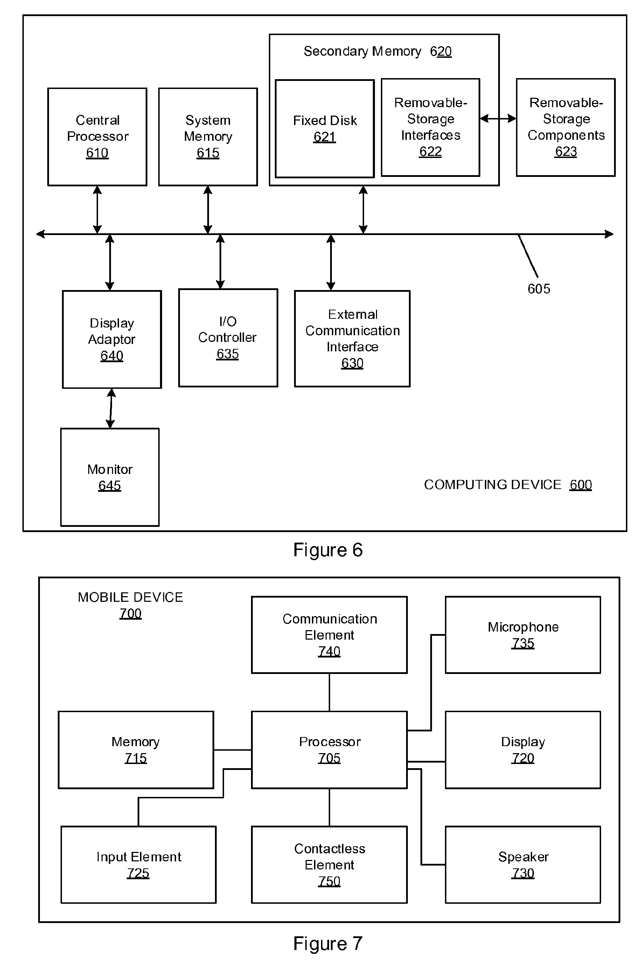

Figure 6 illustrates an example of a computing device (600) in which various aspects of the disclosure may be implemented, for example, the aggregation server. The computing device (600) may be suitable for storing and executing computer program code. The various participants and elements in the previously described system diagrams may use any suitable number of subsystems or components of the computing device (600) to facilitate the functions described herein.

The computing device (600) may include subsystems or components interconnected via a communication infrastructure (605) (for example, a communications bus, a cross-over bar device, or a network). The computing device (600) may include at least one central processor (610) and at least one memory component in the form of computer-readable media.

The memory components may include system memory (615), which may include read only memory (ROM) and random access memory (RAM). A basic input/output system (BIOS) may be stored in ROM. System software may be stored in the system memory (615) including operating system software.

The memory components may also include secondary memory (620). The secondary memory (620) may include a fixed disk (621), such as a hard disk drive, and, optionally, one or more removable-storage interfaces (622) for removable-storage components (623).

The removable-storage interfaces (622) may be in the form of removable-storage drives (for example, magnetic tape drives, optical disk drives, floppy disk drives, etc.) for corresponding removable-storage components (for example, a magnetic tape, an optical disk, a floppy disk, etc.), which may be written to and read by the removable-storage drive.

The removable-storage interfaces (622) may also be in the form of ports or sockets for interfacing with other forms of removable-storage components (623) such as a flash memory drive, external hard drive, or removable memory chip, etc.

The computing device (600) may include an external communications interface (630) for operation of the computing device (600) in a networked environment enabling transfer of data between multiple computing devices (600). Data transferred via the external communications interface (630) may be in the form of signals, which may be electronic, electromagnetic, optical, radio, or other types of signal.

The external communications interface (630) may enable communication of data between the computing device (600) and other computing devices including servers and external storage facilities. Web services may be accessible by the computing device (600) via the communications interface (630).

The external communications interface (630) may also enable other forms of communication to and from the computing device (600) including, voice communication, near field communication, Bluetooth, etc.

The computer-readable media in the form of the various memory components may provide storage of computer-executable instructions, data structures, program modules, and other data. A computer program product may be provided by a computer-readable medium having stored computer-readable program code executable by the central processor (610).

A computer program product may be provided by a non-transient computer-readable medium, or may be provided via a signal or other transient means via the communications interface (630).

Interconnection via the communication infrastructure (605) allows a central processor (610) to communicate with each subsystem or component and to control the execution of instructions from the memory components, as well as the exchange of information between subsystems or components.

Peripherals (such as printers, scanners, cameras, or the like) and input/output (I/O) devices (such as a mouse, touchpad, keyboard, microphone, joystick, or the like) may couple to the computing device (600) either directly or via an I/O controller (635). These components may be connected to the computing device (600) by any number of means known in the art, such as a serial port.

One or more monitors (645) may be coupled via a display or video adapter (640) to the computing device (600).

Figure 10 shows a block diagram of a mobile device (700) that may be used in embodiments of the disclosure. The mobile device (700) may be a cell phone, a feature phone, a smart phone, a satellite phone, or a computing device having a phone capability.

The mobile device (700) may include a processor (705) (e.g., a microprocessor) for processing the functions of the mobile device (700) and a display (720) to allow a user to see the phone numbers and other information and messages. The mobile device (700) may further include an input element (725) to allow a user to input information into the device (e.g., input buttons, touch screen, etc.), a speaker (730) to allow the user to hear voice communication, music, etc., and a microphone (735) to allow the user to transmit his or her voice through the mobile device (700).

The processor (705) of the mobile device (700) may connect to a memory (715). The memory (715) may be in the form of a computer-readable medium that stores data and, optionally, computer-executable instructions.

The mobile device (700) may also include a communication element (740) for connection to communication channels (e.g., a cellular telephone network, data transmission network, Wi-Fi network, satellite-phone network, Internet network, Satellite Internet Network, etc.). The communication element (740) may include an associated wireless transfer element, such as an antenna.

The communication element (740) may include a subscriber identity module (SIM) in the form of an integrated circuit that stores an international mobile subscriber identity and the related key used to identify and authenticate a subscriber using the mobile device (700). One or more subscriber identity modules may be removable from the mobile device (700) or embedded in the mobile device (700).

The mobile device (700) may further include a contactless element (750), which is typically implemented in the form of a semiconductor chip (or other data storage element) with an associated wireless transfer element, such as an antenna. The contactless element (750) may be associated with (e.g., embedded within) the mobile device (700) and data or control instructions transmitted via a cellular network may be applied to the contactless element (750) by means of a contactless element interface (not shown). The contactless element interface may function to permit the exchange of data and/or control instructions between mobile device circuitry (and hence the cellular network) and the contactless element (750).

The contactless element (750) may be capable of transferring and receiving data using a near field communications (NFC) capability (or near field communications medium) typically in accordance with a standardized protocol or data transfer mechanism (e.g., ISO 14443/NFC). Near field communications capability is a short-range communications capability, such as radio-frequency identification (RFID), Bluetooth, infra-red, or other data transfer capability that can be used to exchange data between the mobile device (700) and an interrogation device. Thus, the mobile device (700) may be capable of communicating and transferring data and/or control instructions via both a cellular network and near field communications capability.

The data stored in the memory (715) may include: operation data relating to the operation of the mobile device (700), personal data (e.g., name, date of birth, identification number, etc.), financial data (e.g., bank account information, a bank identification number (BIN), credit or debit card number information, account balance information, expiration date, loyalty provider account numbers, etc.), transit information (e.g., as in a subway or train pass), access information (e.g., as in access badges), etc. A user may transmit this data from the mobile device (700) to selected receivers.

The mobile device (700) may be, amongst other things, a notification device that can receive alert messages and access reports, a portable merchant device that can be used to transmit control data identifying a discount to be applied, as well as a portable consumer device that can be used to make payments.

The foregoing description of the embodiments of the invention has been presented for the purpose of illustration; it is not intended to be exhaustive or to limit the invention to the precise forms disclosed. Persons skilled in the relevant art can appreciate that many modifications and variations are possible in light of the above disclosure.

Some portions of this description describe the embodiments of the invention in terms of algorithms and symbolic representations of operations on information. These algorithmic descriptions and representations are commonly used by those skilled in the data processing arts to convey the substance of their work effectively to others skilled in the art. These operations, while described functionally, computationally, or logically, are understood to be implemented by computer programs or equivalent electrical circuits, microcode, or the like. Furthermore, it has also proven convenient at times, to refer to these arrangements of operations as modules, without loss of generality. The described operations and their associated modules may be embodied in software, firmware, hardware, or any combinations thereof.

The software components or functions described in this application may be implemented as software code to be executed by one or more processors using any suitable computer language such as, for example, Java, C++, or Perl using, for example, conventional or object-oriented techniques. The software code may be stored as a series of instructions, or commands on a non-transitory computer-readable medium, such as a random access memory (RAM), a read-only memory (ROM), a magnetic medium such as a hard-drive or a floppy disk, or an optical medium such as a CD-ROM. Any such computer-readable medium may also reside on or within a single computational apparatus, and may be present on or within different computational apparatuses within a system or network.

Any of the steps, operations, or processes described herein may be performed or implemented with one or more hardware or software modules, alone or in combination with other devices. In one embodiment, a software module is implemented with a computer program product comprising a computer-readable medium containing computer program code, which can be executed by a computer processor for performing any or all of the steps, operations, or processes described.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based hereon. Accordingly, the disclosure of the embodiments of the invention is intended to be illustrative, but not limiting, of the scope of the invention.

## Claims

1. A method of authenticating a public key of a server digital certificate of a third party online entity, the method being carried out at an aggregation server (110) and comprising the steps of:
establishing a secure, independent connection (140) with a mobile device (120);
receiving, from the mobile device (120), a request to authenticate a public key of the server digital certificate, the request including at least an identifier of the third party online entity with which the mobile device seeks to communicate;
retrieving the server digital certificate (134) of the third party online entity from the third party entity;
obtaining the public key (132) or a public key fingerprint from the server digital certificate (134); and
transmitting, to the mobile device (120) over the secure connection (140), at least the obtained public key (132) or public key fingerprint, as the case may be, so as to enable the mobile device (120) to unambiguously communicate or establish a connection with the third party online entity.

2. A method as claimed in claim 1, wherein the step of retrieving the digital certificate (134) from the third party online entity includes the steps of checking whether the server digital certificate (134), the public key (132) of the server digital certificate (134) or fingerprint of the public key is already stored in a database (112) of the aggregation server (110) and, if it is so stored in a database (112) of the aggregation server (110), retrieving the server digital certificate (134), public key (132) or public key fingerprint from the database (112) of the aggregation server (110), and, if it is not so stored in a database (112) of the aggregation server (110), retrieving the server digital certificate (134), public key (132) or public key fingerprint directly from the third party online entity over a communications network.

3. A method as claimed in claim 1, which includes one or more of the steps of: receiving, from the mobile device (120), a public key, public key fingerprint or digital certificate to be authenticated, the public key, public key fingerprint or digital certificate purportedly being that of the third party online entity; comparing the public key, public key fingerprint or digital certificate received from the mobile device to that of the server digital certificate (134) retrieved from the third party online entity; if the public key, public key fingerprint or digital certificate received from the mobile device (120) matches that of the server digital certificate (134) retrieved from the third party online entity, transmitting a public key authentication message to the mobile device (120); and, if the public key, public key fingerprint or digital certificate received from the mobile device does not match that of the server digital certificate (134) retrieved from the third party online entity, transmitting either or both of a public key rejection message and the server digital certificate (134) retrieved from the third party online entity to the mobile device (120) over the secure connection (140).

4. A method as claimed in claim 1, wherein the step of establishing the secure, independent connection (140) with the mobile device (120) includes establishing an out-of-band connection with the mobile device (120).

5. A method as claimed in claim 4, wherein the step of establishing the out-of-band connection with the mobile device (120) includes establishing the out-of-band connection over a separate communication channel than the one used for communicating between the mobile (120) phone and the third party online entity (130).

6. A method conducted at a mobile device (120), the method comprising the steps of:
establishing a secure, independent connection (140) with an aggregation server (110);
transmitting, to the aggregation server (110) over the secure connection (140), a request to authenticate a public key of a server digital certificate of a third party online entity, the request including at least an identifier of the third party online entity with which the mobile device (120) seeks to communicate;
receiving, from the aggregation server (110) over the secure connection (140), at least the public key (132) or a public key fingerprint of the server digital certificate (134); and
using the public key (132) or public key fingerprint received to unambiguously communicate or establish a connection (160) with the third party online entity (130).

7. A method as claimed in claim 6, wherein the step of using the public key (132) or public key fingerprint received to unambiguously establish a connection with the third party online entity (130) includes the steps of comparing the public key (132) or public key fingerprint received from the aggregation server (110) to a public key, public key fingerprint or digital certificate purportedly being that of the third party online entity (130), and establishing the connection (160) if the public key (132) or public key fingerprint so received matches the public key, public key fingerprint or digital certificate purportedly being that of the third party online entity (130).

8. A system (100) for authenticating a public key of a third party online entity (130), the system comprising:
an aggregation server (110);
a third party online entity (130) having a server digital certificate (134) associated therewith; and
a mobile device (120) which seeks to communicate with the third party online entity (130);
wherein the aggregation server (110) is configured to:
establish a secure, independent connection (140) with the mobile device (120);
receive, from the mobile device (120), a request to authenticate a public key of the server digital certificate over the secure connection (140), the request including at least an identifier of the third party online entity (130);
retrieve the server digital certificate (134) from the third party online entity (130);
obtain the public key (132) or a public key fingerprint from the server digital certificate (134); and
transmit, to the mobile device (120) over the secure connection (140), at least the obtained public key (132) or public key fingerprint, so as to enable the mobile device (120) to unambiguously establish a connection (160) with the third party online entity (130).

9. A system as claimed in claim 8, wherein the secure connection (140) is an out-of-band connection.

10. A system as claimed in claim 9, wherein the out-of-band connection is established over a separate communication channel than the one used for communicating between the mobile phone (120) and the third party online entity (130).

11. A system as claimed in claim 8, wherein the secure connection (140) is established using a mobile device digital certificate (114) previously provided to the mobile device (120) by the aggregation server (110).

12. A system as claimed in claim 8, wherein one or both of the server digital certificate (134) and the mobile device digital certificate (114) is an X.509 certificate.

13. A system as claimed in claim 8, wherein the identifier of the third party online entity (130) includes one or more of a third party domain name, a third party server address, an identifier of a domain owner for the third party online entity, an identifier of a domain controller for the third party online entity, and an identifier of a certificate authority associated with the server digital certificate (134).

14. A computer program product for authenticating a public key of a server digital certificate of a third party online entity, the computer program product comprising a computer-readable storage medium having computer-readable program code configured to:
establish a secure, independent connection (140) with a mobile device (120);
receive, from the mobile device (120), a request to authenticate the public key of the server digital certificate, the request including at least an identifier of the third party online entity with which the mobile device (120) seeks to communicate;
retrieve the server digital certificate (134) of the third party online entity from the third party entity (130);
obtain the public key (132) or a public key fingerprint from the server digital certificate (134); and
transmit, to the mobile device (120) over the secure connection (140), at least the obtained public key (132) or public key fingerprint, as the case may be, so as to enable the mobile device (120) to unambiguously communicate or establish a connection (160) with the third party online entity (130).

15. A computer program product for authenticating a public key of a server digital certificate of a third party online entity, the computer program product comprising a computer-readable storage medium having computer-readable program code configured to:
establish a secure, independent connection (140) with an aggregation server (110);
transmit, to the aggregation server (110) over the secure connection (140), a request to authenticate the public key of the server digital certificate of the third party online entity (130), the request including at least an identifier of the third party online entity;
receive, from the aggregation server (110) over the secure connection (140), at least the public key (132) or a public key fingerprint of the server digital certificate (134); and
use the public key (132) or public key fingerprint received to unambiguously communicate or establish a connection (160) with the third party online entity (130).
